# EUROPEAN PATENT APPLICATION

(11) **EP 2 253 682 A1**
(43) Date of publication of application: **24.11.2010**
(21) Application number: 10250838.9
(22) Date of filing: 27.04.2010
(51) Int. Cl.: C09D 183/04, C09D 5/16

(54) **Antifouling coating composition and method**

(30) Priority: 27.04.2009 JP 2009107509
(71) Applicant: Shin-Etsu Chemical Co., Ltd., Tokyo (JP)
(72) Inventor: Kishita, Hirofumi, Annaka-shi Gunma-ken (JP); Sato, Shinichi, Annaka-shi Gunma-ken (JP)
(74) Representative: Stoner, Gerard Patrick

(57) **Abstract**

A coating composition comprising (A) a hydroxyl end-capped diorganopolysiloxane, (B) an organosilicon compound having at least three silicon-bonded hydrolyzable groups in a molecule, and (C) a perfluoropolyether compound having a perfluoropolyether group at one end and a hydrolyzable group at the other end is effective for preventing fouling of a substrate in a marine environment.

## Description

### TECHNICAL FIELD

This invention relates to antifouling coating compositions for preventing fouling of substrates in a marine fouling environment. More particularly, it relates to coating compositions which are applied and cured to substrates of underwater structures (e.g., ships, harbor facilities, buoys, marine reservoirs, pipe lines, bridges, submarine stations, submarine oil well excavation units, power plant water conduits, fish culture nets and fixed shore nets) to form antifouling coatings which are effective for preventing aquatic organisms from depositing and growing on substrate surfaces. It also relates to a method for preventing fouling of substrates in a marine fouling environment.

### BACKGROUND

Underwater structures such as ship hulls, harbor facilities, buoys, marine reservoirs, pipe lines, bridges, submarine stations, submarine oil well excavation units, power plant water conduits, fish culture nets and fixed shore nets are prone to deposition and growth of aquatic organisms such as barnacles, oysters, mussels, green and brown algae, and the like. Such fouling causes corrosion of structures and reduces the cruise speed of ships. The commonly used antifouling method is by coating underwater structures with antifouling paint containing toxic antifouling agents or bleed oil.

In the art, silicone rubber coatings are known effective for preventing deposition of aquatic organisms. JP 2865518 discloses that the antifouling effect of silicone rubber which is still insufficient as such is enhanced by adding a fluorochemical surfactant to silicone rubber. Although this coating is initially effective, the antifouling effect declines with the lapse of time because of timed release of the surfactant.

WO 01094446 discloses a coating composition based on a perfluoropolyether having alkoxysilyl groups at both ends. This coating composition is costly because the main component is an expensive polymer, and used only in limited applications.

WO 02074870 discloses a composition comprising a curable polymer and a fluid fluorinated alkyl or alkoxy-containing polymer or oligomer. Because of the mechanism that the polymer or oligomer which does not react with the main component gradually bleeds out, there are problems that the antifouling effect declines over time and the substantially undegradable substance, which is less toxic, is released to the environment.

JP 2819371 discloses that a room temperature curable silicone composition comprising a diorganopolysiloxane capped with hydroxyl groups at both ends of its molecular chain and a crosslinker becomes effective for antifouling of building sealants when a fluorine compound having alkoxysilyl groups at both ends is added thereto. Since this fluorine compound is highly reactive due to the presence of functional groups at both ends, it is readily incorporated into the crosslinked structure of siloxane before it bleeds out to the surface. Even when it bleeds out to the surface, its constraint at both ends prevents the fluorinated segment from actively working, failing to exert a sufficient antifouling effect against rigorous fouling in the marine environment.

Another method for preventing the settlement and growth of aquatic organisms on underwater structures is by coating toxic antifouling agents such as organotin compounds and cuprous oxide. However, the use of toxic antifouling agents and the use of antifouling paint containing nonfunctional bleeding components as mentioned above raise issues unfavorable from the standpoints of environmental pollution, safety and hygiene, because these antifouling agents are dissolved, dispersed or settled in sea water and have detrimental impacts on fish and shellfish and eventually on human bodies.

### Citation List

Patent Document 1: JP 2865518
Patent Document 2: WO 01094446 (JP-A 2003-535938)
Patent Document 3: WO 02074870 (JP-A 2004-531600)
Patent Document 4: JP 2819371

An object herein is to provide new and useful antifouling coating compositions which can be coated and cured onto a substrate of an underwater structure to prevent the settlement of aquatic organisms on the substrate surface, while reducing or avoiding issues of environmental pollution, safety and hygiene. Other aspects are the use of the compositions for preventing fouling in a marine environment, and the coated underwater structures or substrates themselves.

The inventors have found that an antifouling coating composition comprising (A) a diorganopolysiloxane capped with a hydroxyl group at each end of its molecular chain, which is inexpensive, safe, and antifouling, (B) an organosilicon compound having at least three silicon-bonded hydrolyzable groups in a molecule, and (C) a perfluoropolyether compound having the general formula (1) is effective for preventing fouling of a substrate in a marine fouling environment. On use, the composition is coated and cured to the substrate. The coating is effective for preventing the settlement of aquatic organisms to the substrate surface. This raises no issues unfavorable from the standpoints of environment, safety and hygiene.

More particularly, in the course of siloxane curing, the perfluoropolyether compound as component (C) segregates on the surface of a coating since it is less compatible with the siloxane as main component (A). Simultaneously, it is incorporated into the crosslinked structure of siloxane via a hydrolyzable group (e.g., alkoxysilyl group) at one end thereof. Therefore, the perfluoropolyether group on the perfluoropolyether compound (C) is freely movable even after the composition is cured, and thus effectively orients toward the coating surface, exerting a high antifouling effect. In addition, since the hydrolyzable group at one end of the compound (C) is tightly incorporated and captured in the crosslinked structure of siloxane as described just above, the highly antifouling component is not released into the environment and exerts a high antifouling effect over a long period of time, preventing the corrosion of underwater structures and the reduction of ship cruise speed without raising problems of environmental pollution and safety/hygiene.

In one aspect, the invention provides an antifouling coating composition for preventing fouling of a substrate in a marine fouling environment, comprising
(A) 100 parts by weight of a diorganopolysiloxane capped with a hydroxyl group at each end of its molecular chain,
(B) 0.5 to 30 parts by weight of an organosilicon compound having at least three silicon-bonded hydrolyzable groups in a molecule, and
(C) 0.1 to 30 parts by weight of a perfluoropolyether compound having the general formula (1):

   Rf-X-SiR¹ₙZ₃₋ₙ (1)

   wherein Rf is a perfluoropolyether group having a number average molecular weight of 400 to 10,000, X is a divalent organic group, R¹ is a monovalent hydrocarbon group of 1 to 6 carbon atoms or an aryl group of 6 to 12 carbon atoms, n is an integer of 0 to 2, and Z is a hydrolyzable group.

In a preferred embodiment, the perfluoropolyether compound as component (C) has the general formula (2):

Rf-X-SiR¹ₙ(OR²)₃₋ₙ (2)

wherein Rf, X and R¹ are as defined above, and R² is each independently a monovalent hydrocarbon group of 1 to 6 carbon atoms or an aryl group of 6 to 12 carbon atoms.

Typically Rf has the structural formula (3):

F(CF₂O)₁(CFXCF₂O)ₘ(CF₂CF₂CF₂O)ₙCFX(CF₂)ₐ- (3)

O wherein X is F or CF₃, subscripts 1, m, n and a are integers to give a number average molecular weight of 400 to 10,000.

Also provided is a method for preventing fouling of a substrate in a marine fouling environment, comprising coating and curing the antifouling coating composition to the substrate.

### ADVANTAGEOUS EFFECTS

The coating compositions are applied and cured to substrates of underwater structures such as ship hulls, bridges, oil reservoirs, harbor facilities, buoys, pipe lines, submarine stations, submarine oil well excavation units, power plant water conduits, fish culture nets and fixed shore nets to form coatings which are effective for preventing aquatic organisms from depositing and growing on substrate surfaces. The coatings raise no problems of environmental pollution and safety/hygiene. Using the composition, an effective method for preventing fouling of substrates in a marine fouling environment is provided.

### FURTHER EXPLANATIONS; OPTIONS AND PREFERENCES

The components of the coating composition are described in detail.

### Component A

Component (A) is a diorganopolysiloxane capped with hydroxyl groups at both ends of its molecular chain, having the general formula (4).

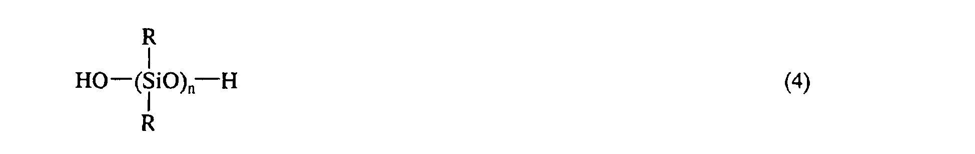

Herein R is each independently an alkyl group of 1 to 8 carbon atoms, cyclohexyl group, alkenyl group, or aryl group, with methyl being preferred. The subscript n is an integer of at least 10, preferably such an integer that the diorganopolysiloxane may have a viscosity of 100 to 100,000 mm²/s at 25°C. With a viscosity of less than 100 mm²/s, a cured coating may become brittle and prone to flaw. With a viscosity in excess of 100,000 mm²/s, a coating composition may become too viscous to apply.

### Component B

Component (B) is an organosilicon compound having at least three hydrolyzable groups each bonded to a silicon atom in a molecule. Any organosilicon compound having at least three silicon-bonded hydrolyzable groups in a molecule may be used while the hydrolyzable groups may have been partially hydrolyzed.

Exemplary hydrolyzable groups include alkoxy, ketoxime, acyloxy, amino, amide, and alkenyloxy groups.

Examples of the organosilicon compound include methyltrimethoxysilane, tetraethoxysilane, methyltris(dimethylketoxime)silane, vinyltriacetoxysilane, phenyltris(N-methylacetamide), vinyltris(N,N-diethylamino)silane, partial hydrolyzates thereof, and tetraethylsilicate.

An appropriate amount of component (B) blended is 0.5 to 30 parts by weight, preferably 2.0 to 15 parts by weight per 100 parts by weight of component (A). A composition containing less than 0.5 pbw of component (B) may lack storage stability and may be cured short of the desired hardness, failing to achieve the desired physical properties. More than 30 pbw of component (B) may lead to extra shrinkage upon curing and a reduced elasticity in the cured state.

### Component C

Component (C) is a perfluoropolyether compound having the general formula (1).

Rf-X-SiR¹ₙZ₃₋ₙ (1)

Herein Rf is a perfluoropolyether group having a number average molecular weight (Mn) of 400 to 10,000, X is a divalent organic group, R¹ is a monovalent hydrocarbon group of 1 to 6 carbon atoms or aryl group of 6 to 12 carbon atoms, n is an integer of 0 to 2, and Z is a hydrolyzable group.

Preferably, Rf is a perfluoropolyether group having the structural formula (3):

F(CF₂O)₁(CFXCF₂O)ₘ(CF₂CF₂CF₂O)ₙCFX(CF₂)ₐ- (3)

wherein X is F or CF₃, subscripts 1, m, n and a are integers to give a number average molecular weight of 400 to 10,000. More preferred are perfluoropolyether groups having the structural formulae (5) to (7).

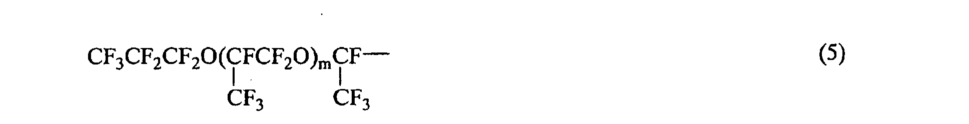

CF₃CF₂CF₂O(CF₂CF₂CF₂O)ₘCF₂CF₂- (6)

CF₃O(CF₂CF₂O)ₚ(CF₂O)_{q}CF₂CF₂)- (7)

Herein m, p and q are such integers that Rf may have a number average molecular weight (Mn) of 400 to 10,000.

If Mn is less than 400, the desired antifouling effect may not be exerted. If Mn is more than 10,000, a perfluoropolyether compound may become less compatible with the main component, diorganopolysiloxane and thus difficult to uniformly disperse in the composition.

X is a divalent organic group such as an alkylene group, arylene group or combination thereof, which may be separated by an ether bond, amide bond, carbonyl bond or the like. Suitable divalent organic groups include -CH₂CH₂-, -CH₂CH₂CH₂OCH₂-, -CH₂CH₂CH₂NH-CO-, and -CH₂CH₂CH₂O-CO-.

Z is a hydrolyzable group such as alkoxy, ketoxime, acyloxy, amino, amide, and alkenyloxy groups.

Among others, hydrolyzable groups containing an oxygen atom are preferred. In this case, the general formula (1) is represented by the following general formula (2):

Rf-X-SiR¹ₙZ₃₋ₙ (2)

wherein Rf and X are as defined above, and R¹ and R² are each independently a monovalent hydrocarbon group of 1 to 6 carbon atoms or an aryl group of 6 to 12 carbon atoms.

In formulae (1) and (2), examples of R¹ and R² include methyl, ethyl, and phenyl.

An appropriate amount of component (C) blended is 0.1 to 30 parts by weight, preferably 1 to 20 parts by weight per 100 parts by weight of component (A). Less than 0.1 pbw of component (C) may fail to exert the desired antifouling effect. More than 30 pbw of component (C) may be uneconomical because of insignificant improvement in the antifouling effect.

### Other components

In addition to components (A) to (C), the composition may further comprise any well-known additives as long as they do not adversely affect the composition.

Upon exposure to air, the composition cures into a rubbery elastomer because crosslinking reaction takes place in the presence of airborne moisture. Any of catalysts well known to promote reaction of this type may be added, for example, amine compounds, quaternary ammonium salts, organometallic compounds, titanium chelate compounds and guanidyl-containing compounds.

Other additives include flow modifiers for modifying the flow of the composition when coated to an underwater structure, inorganic fillers for controlling the hardness, tensile strength and elongation of the cured composition, pigments for tailoring the outer appearance, and organic solvents. Any of well-known additives may be added in standard amounts.

### Preparation of composition

The composition may be prepared by any desired methods, for example, by intimately mixing components (A) to (C) and optional components on a suitable mixing device such as a Ross mixer, planetary mixer, Hobart mixer, two-roll mill, and three-roll mill alone or in combination.

### Imparting antifouling to substrate

In order to impart antifouling property to a substrate of an underwater structure for use in a marine fouling environment, the composition may be simply coated and cured to the substrate.

As used herein, the term "substrate" refers to surface portions, parts or materials which are directly exposed to the marine environment, including structures such as bridges, marine reservoirs, harbor facilities, drilling platforms, submarine oil rigs, and the like; water conduits and other parts in power plants; ship hulls; fish culture nets and fixed shore nets.

The method of coating the composition to a substrate is not particularly limited. Any well-known coating techniques such as spray coating and dipping may be used. The thickness of a coating is preferably in the range of 10 to 2,000 µm although it varies with a particular marine fouling environment or the type of underwater structure.

With respect to the curing method, the coating composition may be allowed to stand in air because it readily cures in the presence of airborne moisture. Preferably it is cured at a relative humidity of 20 to 100% and room temperature (e.g., 0°C to 30°C) to 50°C for 120 minutes to 7 days. The composition then cures into a coating having improved antifouling property.

### EXAMPLE

Examples of the invention are given below by way of illustration and not by way of limitation. The term "pbw" is parts by weight.

### Composition A

100 pbw of dimethylpolysiloxane capped with a hydroxyl group at each end of its molecular chain having a viscosity of 20,000 mm²/s at 25°C was mixed with 12 pbw of fumed silica surface treated with hexamethyldisilazane and having a specific surface area of 150 m²/g and 1.5 pbw of titanium dioxide. The mixture was worked one pass on a three-roll mill, whereupon it was mixed with 7 pbw of methyltributanoximesilane and 0.1 pbw of dibutyltin dioctoate while defoaming. This is designated composition A.

### Composition B

100 pbw of dimethylpolysiloxane capped with a hydroxyl group at each end of its molecular chain having a viscosity of 5,000 mm²/s at 25°C was mixed with 10 pbw of fumed silica surface treated with hexamethyldisilazane and having a specific surface area of 200 m²/g and 1.5 pbw of titanium dioxide. The mixture was worked one pass on a three-roll mill, obtaining component I.
Separately, 8 pbw of ethyl polysilicate and 2 pbw of dibutyltin dilaurate were mixed, obtaining component II.
100 pbw of component I was mixed with 10 pbw of component II. This mixture is designated composition B.

Next, composition A was compounded with amounts of Additives 1 to 5 having structural formulae (8) to (12) according to the recipe of Table 1. According to the coating performance test described below, the resulting composition was coated and cured to a substrate and tested for antifouling property.

In the case of composition B, when 100 pbw of component I was mixed with 10 pbw of component II, amounts of Additives 1 to 3 having structural formulae (8) to (10) were also compounded according to the recipe of Table 1. According to the coating performance test described below, the resulting composition was coated and cured to a substrate and tested for antifouling property.

### Additive 1:

C₃F₇O(CF₂CF₂CF₂O)₁₀CF₂CF₂CONHCH₂CH₂CH₂Si(OCH₃)₃ (8)

### Additive 2:

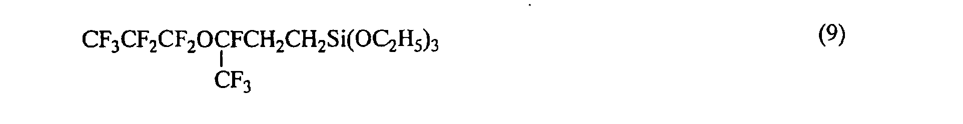

### Additive 3:

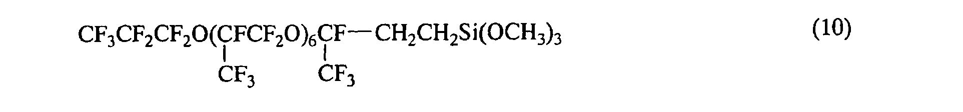

### Additive 4:

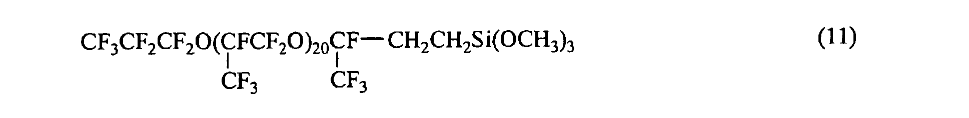

### Additive 5:

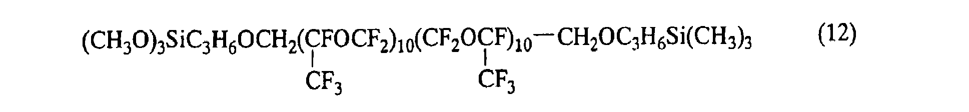

**Table 1**

| Coating composition on test | | | | | | | | |
|---|---|---|---|---|---|---|---|---|
| | | Composition | | Additive | | | | |
| | | A | B | 1 | 2 | 3 | 4 | 5 |
| Example | 1 | 100.0 | | 2.0 | | | | |
| | 2 | 100.0 | | | | 3.0 | | |
| | 3 | 100.0 | | | | 5.0 | | |
| | 4 | 100.0 | | | | 10.0 | | |
| | 5 | 100.0 | | | | | 3.0 | |
| | 6 | | 110.0 | 3.0 | | | | |
| | 7 | | 110.0 | | | 5.0 | | |
| Comparative Example | 1 | 100.0 | | | | | | |
| | 2 | 100.0 | | | 5.0 | | | |
| | 3 | | 110.0 | | 5.0 | | | |
| | 4 | | 110.0 | | 10.0 | | | |
| | 5 | 100.0 | | | | | | 5.0 |

### Coating performance test

Sandblasted steel plates of 100 × 200 × 2 mm were previously coated with an epoxy base anti-corrosion primer to a thickness of 200 µm. The test coating compositions were coated on the primed steel plates and kept at 23°C and 50% RH for 7 days, during which they cured into films of 100 µm thick, completing test specimens. In a suspension test, the specimens were suspended at a depth of 1.5 m in seawater offshore Kanagawa, Japan for 12 months. The specimens were taken out of the sea, and the deposition of sea organisms including shells (e.g., barnacle) and seaweed on the specimens was observed. The specimens were rated as follows.
○: no deposits
Δ: some deposits
×: much deposits

The results are shown in Tables 2 and 3.

**Table 2**

| | Example | | | | | | |
|---|---|---|---|---|---|---|---|
| | 1 | 2 | 3 | 4 | 5 | 6 | 7 |
| Deposits after 3 months | ○ | ○ | ○ | ○ | ○ | ○ | ○ |
| Deposits after 6 months | ○ | ○ | ○ | ○ | ○ | ○ | ○ |
| Deposits after 12 months | ○ | ○ | ○ | ○ | ○ | ○ | ○ |

**Table 3**

| | Comparative Example | | | | |
|---|---|---|---|---|---|
| | 1 | 2 | 3 | 4 | 5 |
| Deposits after 3 months | × | × | × | △ | △ |
| Deposits after 6 months | × | × | × | × | △ |
| Deposits after 12 months | × | × | × | × | × |

As is evident from Tables 2 and 3, the coating compositions within the scope of the invention are fully antifouling.

## Claims

1. An antifouling coating composition for preventing fouling of a substrate in a marine fouling environment, comprising
(A) 100 parts by weight of a diorganopolysiloxane capped with a hydroxyl group at each end of its molecular chain,
(B) 0.5 to 30 parts by weight of an organosilicon compound having at least three silicon-bonded hydrolyzable groups in a molecule, and
(C) 0.1 to 30 parts by weight of a perfluoropolyether compound having the general formula (1):
Rf-X-SiR¹ₙZ₃₋ₙ (1)
wherein Rf is a perfluoropolyether group having a number average molecular weight of 400 to 10,000, X is a divalent organic group, R¹ is a monovalent hydrocarbon group of 1 to 6 carbon atoms or aryl group of 6 to 12 carbon atoms, n is an integer of 0 to 2, and Z is a hydrolyzable group.

2. The composition of claim 1 wherein component (C), perfluoropolyether compound has the general formula (2): 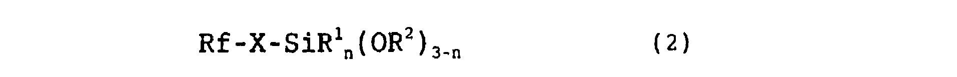 wherein Rf, X and R¹ are as defined above, and R² is each independently a monovalent hydrocarbon group of 1 to 6 carbon atoms or aryl group of 6 to 12 carbon atoms.

3. The composition of claim 1 or 2 wherein Rf has the structural formula (3): 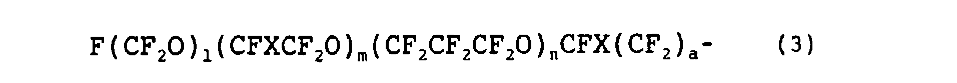 wherein X is F or CF₃, subscripts 1, m, n and a are integers to give a number average molecular weight of 400 to 10,000.

4. A method for preventing fouling of a substrate in a marine fouling environment, comprising coating and curing the antifouling coating composition of any one of claims 1 to 3 to the substrate.

5. A substrate or structure for underwater marine use, having a coating of a cured composition according to any one of claims 1 to 3.
